(19) **Europäisches Patentamt**
**European Patent Office**
**Office européen des brevets**

(11) **EP 4 282 817 A1**

## (12) EUROPEAN PATENT APPLICATION
published in accordance with Art. 153(4) EPC

(43) Date of publication:
**29.11.2023 Bulletin 2023/48**

(21) Application number: **21921498.8**

(22) Date of filing: **27.12.2021**

(51) International Patent Classification (IPC):
**C01B 7/04** (2006.01)       **B01J 23/46** (2006.01)
**B01J 37/02** (2006.01)       **B01J 37/08** (2006.01)

(86) International application number:
**PCT/KR2021/019964**

(87) International publication number:
**WO 2022/158741 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2021   KR 20210008011**

(71) Applicant: **Hanwha Solutions Corporation
Jung-gu
Seoul 04541 (KR)**

(72) Inventors:
• **CHUN, Jeong Hwan
  Daejeon 34128 (KR)**
• **CHO, Young Jin
  Daejeon 34128 (KR)**
• **YUN, Seong Ho
  Daejeon 34128 (KR)**

(74) Representative: **Berggren Oy
P.O. Box 16
Eteläinen Rautatiekatu 10A
00101 Helsinki (FI)**

(54) **METHOD FOR PRODUCING CHLORINE IN HIGH YIELD THROUGH HYDROGEN CHLORIDE OXIDATION REACTION**

(57)    This invention relates to a method for producing chlorine in a high yield through a hydrogen chloride oxidation reaction and more specifically, this invention is characterized in that chlorine is produced in a high yield by subjecting hydrogen chloride to an oxidation reaction in a mixed gas containing carbon oxide.

EP 4 282 817 A1

**Description**

[Technical Field]

This invention relates to a method for producing chlorine in a high yield through a hydrogen chloride oxidation reaction and more specifically, this invention is characterized in that chlorine is produced in a high yield by subjecting hydrogen chloride to an oxidation reaction in a mixed gas containing carbon oxide.

[Background Art]

A Deacon process, which is a catalytic gas phase oxidation reaction of hydrogen chloride developed by Henry Deacon in 1868, is an environment-friendly and energy-efficient process that regenerates hydrogen chloride by-products generated during the production process of polyurethane and polycarbonate to chlorine. However, a $CuO/CuCl_2$ catalyst used in the initial stage Deacon process has very low activity, and thus, it should be progressed at a reaction temperature of 400°C or more, and during the reaction, copper oxide active material disappears after being converted into highly volatile copper chloride-based material, and thus, catalyst durability was low.

Afterward, Sumitomo Chemical developed a new kind of a Deacon process catalyst in which ruthenium oxide active material is supported on a rutile-type titania carrier in an epitaxial direction, and this catalyst is characterized by producing chlorine even at a low temperature of 300°C. However, since a hydrogen chloride oxidation reaction is an exothermic reaction, a temperature higher than a reaction temperature is locally formed at hot-spot inside a reaction tube, which causes sintering resulting in decrease in the dispersion degree of ruthenium oxide active material, and thus, the activity of a catalyst continues to decrease during long-time operation of a reaction.

As explained, it is very difficult to meet catalyst durability and activity, life, and the like in a Deacon process. And, most of such catalysts are strict on the form or operation conditions of a reactor, and the like, and thus, there are a lot of restrictions on use. Particularly, in the case of a powder form, when used in a fixed bed reactor, a differential pressure is generated at the front and rear of the catalyst layer, and thus, the operation sometimes becomes impossible. Thus, studies on various catalysts are being progressed to solve the above-mentioned problems.

For example, Korean Laid-Open Patent Publication No. 10-2012-0040701 relates to a method for producing chlorine by gas phase oxidation with a ruthenium-based supported catalyst, and it is stated that a catalyst carrier has plural pores with a pore diameter greater than 50 nm, and nanoparticles containing ruthenium, ruthenium compounds are supported as catalytically active components.

Korean Laid-Open Patent Publication No. 10-2011-0107350 relates to a gas phase reaction catalyst with high mechanical stability, comprising one or more active metals on a carrier comprising aluminum oxide, and it is disclosed that the aluminum oxide component of the carrier substantially comprises alpha-aluminum oxide. Particularly, it is stated that the catalyst comprises, based on the total weight of the catalyst, a) 0.001 to 10 wt% of ruthenium, copper and/or gold, b) 0.1 to 10 wt% of nickel, c) 0 to 5 wt% of one or more alkali earth metals, d) 0 to 5 wt% of one or more alkali metals, 3) 0 to 5 wt% of one or more rear earth elements, f) one selected from pallium, platinum, iridium and rhenium, on a carrier made of $\alpha$-$Al_2O_3$, and the catalyst is used for oxidation of hydrogen chloride (Deacon reaction).

Korean Laid-Open Patent Publication No. 10-2013-0100282 discloses a catalyst for producing chlorine by catalytic gas phase oxidation of hydrogen chloride using oxygen, comprising calcined tin dioxide as a carrier and at least one halogen-containing ruthenium compound, and use thereof.

Finally, a non-patent document 'A CeO2/ZrO2-TiO2 Catalyst for the Selective Catalytic Reduction of NOx with NH3 (Catalysts, pp.592. 2018.08.)' relates to a catalyst for selective catalytic reduction of NOx by $NH_3$, and it mentions a Ce-Zr-Ti oxide catalyst as a catalyst for an oxidation reaction.

Thus, the inventors of the present disclosure, during studies on the hydrogen chloride oxidation reaction, found out that in case hydrogen chloride is subjected to an oxidation reaction in mixed gas containing carbon oxide, compared to the case of conducting an oxidation reaction in the presence of oxygen alone, the oxidation reaction activity of hydrogen chloride is improved, and thus, chlorine can be produced in a high yield, and completed the invention.

[Disclosure of Invention]

[Technical Problem]

This invention has been developed to solve the problems of the prior art, and it is an object of the invention to provide a method for producing chlorine capable of producing chlorine in a high yield by subjecting hydrogen chloride to an oxidation reaction in mixed gas containing carbon oxide.

It is another object of the invention to provide a method for preparing a molded catalyst for an oxidation reaction process of hydrogen chloride.

[Technical Solution]

As technical means to achieve the aforementioned technical problems, according to one aspect of the invention, there is provided a method for producing chlorine through an oxidation reaction of hydrogen chloride, comprising steps of: charging a molded catalyst for an oxidation reaction process of hydrogen chloride in a reactor; and adding hydrogen chloride and mixed gas to the reactor and reacting them, wherein the mixed gas comprises oxygen and carbon oxide.

The content of the mixed gas may be 50 parts by weight to 150 parts by weight, based on 100 parts by weight of the hydrogen chloride.

The content of carbon oxide may be 0.1 parts by weight to 10 parts by weight, based on total 100 parts by weight of the mixed gas.

The carbon oxide may comprise at least one selected from carbon monoxide (CO) and carbon dioxide ($CO_2$).

The weight ratio of the carbon monoxide (CO) and carbon dioxide ($CO_2$) may be 1: 1 to 20.

The molded catalyst for an oxidation reaction process of hydrogen chloride may comprise a carrier; and ruthenium oxide supported on the carrier.

The carrier may comprise a carrier selected from a group consisting of alumina, titania, zirconia and combinations thereof.

The molded catalyst may further comprise metal oxide supported on the carrier, and the metal oxide comprises metal oxide represented by the following Chemical Formula 1:

[Chemical Formula 1]    $MO_2$

In the Chemical Formula 1, M is Ti, Ce or Zr.

Based on 100 parts by weight of the carrier, the content of the ruthenium oxide may be 1 part by weight to 10 parts by weight, and the content of the metal oxide may be 0.5 parts by weight to 10 parts by weight.

The molded catalyst may be in the shape selected from the group consisting of powders, particles, pellets and combinations thereof.

In case the molded catalyst is in the shape of pellet, the diameter of the pellet may be 1 mm to 10 mm.

The yield of chlorine through the production method of chlorine may be such that a space time yield (STY) as calculated by the following Mathematical Formula 1 is 1.35 or more.

[Mathematical Formula 1]

$$\text{Space time yield(STY)} = \text{hydrogen gas production amount(gcl2)} / \text{catalyst amount(gcat)} \times \text{reaction time(hr)}$$

In the Mathematical Formula 1, the reaction time is 50 hours(hr).

The molded catalyst may have a space time yield(STY), as calculated by the Mathematical Formula 1, of 1.45 or more.

The input flow rate of the hydrogen chloride and mixed gas may be 50 mL/min to 200 mL/min.

The reaction of the hydrogen chloride and mixed gas may be conducted at a temperature of 280°C to 380°C.

According to another aspect of the invention, there is provided a method for preparing the molded catalyst for an oxidation reaction process of hydrogen chloride, comprising steps of: supporting metal oxide on a carrier; and supporting a ruthenium precursor on the carrier on which the metal oxide is supported.

The method for preparing the molded catalyst for an oxidation reaction process of hydrogen chloride may further comprise a step of drying and calcining the carrier, after the step of supporting the ruthenium precursor.

The drying may be conducted at a temperature of 50°C to 150°C for 3 hours to 5 hours, and the calcination may be conducted at a temperature of 300°C to 700°C for 2 hours to 6 hours.

[Effects]

The method for producing chlorine through a hydrogen chloride oxidation reaction as explained above, compared to a case of conducting an oxidation reaction only in the presence of oxygen, can improve an oxidation reaction activity of hydrogen chloride, and thus, produce chlorine in a high yield, by subjecting hydrogen chloride to an oxidation reaction in mixed gas containing carbon oxide.

Further, the catalyst used for the oxidation reaction can solve a sintering problem of ruthenium oxide generated in a commercial production process of chlorine through a hydrogen chloride oxidation reaction, and thus, can maintain the initial catalyst activity despite a long-time catalyst operation.

Moreover, the catalyst is provided as a catalyst in the form of pellets in a commercial production process of chlorine through a hydrogen chloride oxidation reaction, and high mechanical strength may be provided such that they may not be ground during the process.

Finally, the catalyst provides high catalyst activity and durability, and is not restricted in terms of the form, operation conditions of a reactor, and the like, and thus, there is no restrictions on use, and ease of handling is provided.

[Best Mode for Carrying Out the Invention]

Hereinafter, the invention will be explained in more detail. However, this invention may be embodied in various forms, and is not limited by examples described herein, but is defined only by the claims described below.

Moreover, the terms used herein are only to explain specific embodiments, and are not intended to limit the invention. A singular expression includes a plural expression thereof, unless it is expressly stated or obvious from the context that such is not intended. Throughout the specification, 'comprising' any constructional element does not mean that other constructional elements are excluded, but means that other constructional elements may be further included, unless otherwise stated.

According to the first aspect of the invention, there is provided a method for producing chlorine through an oxidation reaction of hydrogen chloride, comprising steps of:

> charging a molded catalyst for an oxidation reaction process of hydrogen chloride in a reactor; and adding hydrogen chloride and mixed gas to the reactor and reacting them,
> wherein the mixed gas comprises oxygen and carbon oxide.

Before specifically explaining the invention, the carbon oxide is generally a catalyst poison, and may be one of impurities that may exist in a feed during a hydrogen chloride oxidation reaction. Namely, in case a catalyst commonly used in a hydrogen chloride oxidation reaction is used, the carbon oxide may act as an element inhibiting the oxidation reaction. However, if the molded catalyst for an oxidation reaction process of hydrogen chloride according to the invention is used, the carbon oxide that may otherwise act as an impurity in a hydrogen chloride oxidation reaction may act as an additive capable of increasing the yield of chlorine to the contrary.

Hereinafter, the method for producing chlorine through a hydrogen chloride oxidation reaction according to the first aspect of the invention will be explained in detail according to steps.

First, according to one embodiment of the invention, the method for producing chlorine through a hydrogen chloride oxidation reaction may comprise a step of charging a molded catalyst for an oxidation reaction process of hydrogen chloride in a reactor.

According to one embodiment of the invention, the molded catalyst for an oxidation reaction process of hydrogen chloride may comprise a carrier; and ruthenium oxide supported on the carrier. Wherein, the carrier may comprise a carrier selected from the group consisting of alumina, titania, zirconia and combinations thereof, and preferably, may comprise titania.

According to one embodiment of the invention, as the titania carrier, for example, anatase-type titania or rutile-type titania, amorphous titania or a mixture thereof may be used. Further, the titania carrier may comprise oxide such as alumina, zirconia or niobium oxide. Preferably, rutile-type titania is used, and for example, titania from Sakai corporation may be used, but it not limited thereto. Meanwhile, the specific surface area of the titania carrier may be measured by a commonly used BET method, and the specific surface area may be 5 to 300 $m^2/g$, preferably 5 to 50 $m^2/g$. If the specific surface area exceeds the above range, it may be difficult to secure heat stability of ruthenium oxide, and if it is less than the above range, dispersion stability may be degraded and catalyst activity may be also lowered.

Further, the aluminum carrier may be preferably alpha-alumina. Wherein, the alpha-alumina is preferable in that absorption of other impurities may hardly occur since it has low BET specific surface area. Meanwhile, the specific surface area of the aluminum carrier may be 10 to 500 $m^2/g$, preferably 20 to 350 $m^2/g$.

Moreover, the zirconia carrier may have pores in the range of 0.05 to 10 $\mu m$, and the specific surface area may be the same as above.

According to one embodiment of the invention, the molded catalyst may further comprise metal oxide supported on the carrier, and the metal oxide may comprise metal oxide represented by the following Chemical Formula 1.

[Chemical Formula 1]     $MO_2$

In the Chemical Formula 1, M may be Ti, Ce or Zr. Namely, the metal oxide may be titania ($TiO_2$), ceria ($CeO_2$)

or zirconia ($ZrO_2$), and it may comprise metal oxide selected from the group consisting of combinations thereof.

According to one embodiment of the invention, the metal oxide may be preferably ceria and zirconia, and the weight ratio of the ceria and zirconia may be 1: 0.5 to 1, preferably 1:1. In case the weight ratio of the ceria and zirconia meets the above numerical range, a molded catalyst for a hydrogen chloride oxidation reaction process comprising the same may have excellent mechanical strength and catalyst durability, and thus, may be suitable for long time catalyst operation.

According to one embodiment of the invention, the metal oxide may be provided in the form of a precursor thereof. For example, a cerium precursor may exist in the form of a complex salt, and it may comprise a cerium compound, particularly, a metal salt such as cerium nitrate, cerium acetate or cerium chloride, and the like. Preferably, it may comprise cerium nitrate, and after being impregnated in a carrier in the form of a precursor, it may pass through drying and calcination steps and be provided as a final molded catalyst.

According to one embodiment of the invention, based on 100 parts by weight of the carrier, the content of the ruthenium oxide may be 1 part by weight to 10 parts by weight, and the content of the metal oxide may be 0.5 parts by weight to 10 parts by weight.

According to one embodiment of the invention, the molded catalyst may be in the form selected from the group consisting of powders, particles, pellets and combinations thereof, and preferably, it may be in the form of pellets. Wherein, in case the molded catalyst is in the form of pellets, the diameter of the pellet may be 1 mm to 10 mm.

Next, according to one embodiment of the invention, the method for producing chlorine through a hydrogen chloride oxidation reaction may comprise a step of adding hydrogen chloride and mixed gas to the reactor and reacting them.

According to one embodiment of the invention, the carbon oxide may comprise at least one selected from carbon monoxide (CO) and carbon dioxide ($CO_2$). Wherein, preferably, carbon monoxide (CO) may be used alone as the carbon oxide, and in case both carbon monoxide (CO) and carbon dioxide ($CO_2$) are used, the weight ratio thereof may be 1: 1 to 20. Meanwhile, according to one example of the invention, the weight ratio of the carbon monoxide (CO) and carbon dioxide ($CO_2$) may be about 1: 6 to 7.

According to one embodiment of the invention, the content of the mixed gas may be 50 parts by weight to 150 parts by weight, for example, about 100 parts by weight, based on 100 parts by weight of the hydrogen chloride. Further, the mixed gas may comprise oxygen and carbon oxide, and the content of the carbon oxide may be 0.1 parts by weight to 10 parts by weight, preferably 0.1 parts by weight to 5 parts by weight, for example, 1 part by weight to 4 parts by weight, based on 100 parts by weight of the total mixed gas. In case the content of the carbon oxide is less than 0.1 parts by weight, based on 100 parts by weight of the total mixed gas, production of chlorine in a high yield, which is the characteristic of the invention resulting from the addition of carbon oxide, may be impossible, and in case it exceeds 10 parts by weight, carbon oxide may act as impurity and degrade catalyst performance to the contrary.

According to one embodiment of the invention, the reaction for producing chlorine may be a fixed bed type or fluidized bed type, gas phase reaction, and the like, and preferably, a gas phase reaction may be used. The hydrogen chloride oxidation reaction is an equilibrium reaction, and if it is conducted at an excessively high temperature, equilibrium conversion may be lowered, and thus, it is preferable that the reaction is conducted at a relatively low temperature. Wherein, the reaction temperature may be commonly 100°C to 500°C, preferably 280°C to 380°C. Further, the reaction pressure may be commonly about 0.1 Mpa to 5 Mpa.

Further, the feed rate of hydrogen chloride may be represented by a gas feed rate per 1 L of a catalyst (L/h; 0°C, 1 atm converted), i.e., GHSV, and it may be commonly about 10 to 20000 $h^{-1}$. However, the amount of the catalyst added may be slightly modified mainly according to a temperature, the amount of a catalyst and the amount of produced chlorine product. Preferably, the input flow rate of the hydrogen chloride and mixed gas may be 50 mL/min to 200 mL/min, for example, about 100 mL/min.

According to one embodiment of the invention, the yield of chlorine through the above production method of chlorine may be such that a space time yield(STY) as calculated by the following Mathematical Formula 1 may be 1.35 or more, preferably 1.45 or more.

[Mathematical Formula 1]

Space time yield(STY) = hydrogen gas production amount(gcl2) / catalyst

amount(gcat) x reaction time(hr).

In the Mathematical Formula 1, the reaction tiem may be 50 hours(hr). Namely, since the production method of chlorine subjects carbon oxide to a reaction in the presence of mixed gas containing carbon oxide, a space time yield(STY) may be high, confirming that produced chlorine is obtained in a high yield.

According to the second aspect of the invention, there is provided a method for preparing the molded catalyst for an oxidation reaction process of hydrogen chloride according to the first aspect of the invention, comprising steps of: supporting metal oxide on a carrier; and supporting a ruthenium precursor on the carrier on which the metal oxide is supported.

Although detailed descriptions of the parts overlapping with the first aspect have been omitted, the same as explained for the first aspect of the invention applies to the second aspect.

Hereinafter, the preparation method of a molded catalyst for a hydrogen chloride oxidation reaction process according to the second aspect of the invention will be explained in detail according to steps.

First, according to one embodiment of the invention, the preparation method of a molded catalyst for a hydrogen chloride oxidation reaction process may comprise a step of molding a carrier before supporting of metal oxide.

According to one embodiment of the invention, the carrier may comprise carriers selected from the group consisting of alumina, titania, zirconia and combinations thereof, and preferably, it may comprise titania.

According to one embodiment of the invention, the molding of the carrier may be conducted by mixing a carrier with an organic binder, an inorganic binder and water and molding. The carrier molded as explained above may be applied to a fixed bed reactor, and the use is not restricted in terms of the form of a reactor, operation conditions, and the like, and thus, it can be easily handled. Particularly, when applied to a fixed bed reactor, it may be used without generation of differential pressures, and it may increase catalyst activity and strengthen thermal stability, thus providing improved durability and mechanical strength.

According to one embodiment of the invention, the organic binder may comprise substances selected from the group consisting of methyl cellulose, hydroxyethyl cellulose, sodium carboxymethyl cellulose, purified starch, dextrin, polyvinyl alcohol, polyvinyl butyral, polymethylmethacrylate, polyethylene glycol, paraffin, wax emulsion, microcrystalline wax, and combinations thereof, and by comprising such an organic binder, moldability of a carrier may be improved.

According to one embodiment of the invention, the inorganic binder may comprise substances selected from the group consisting of alumina sol, silica sol, titania sol, zirconia sol and combinations thereof, and by comprising such an inorganic binder, mechanical properties of a carrier may be improved.

Next, according to one embodiment of the invention, the preparation method of a molded catalyst for a hydrogen chloride oxidation reaction process may comprise a step of supporting metal oxide on the carrier.

According to one embodiment of the invention, the metal oxide may comprise metal oxides represented by the following Chemical Formula 1.

[Chemical Formula 1]     $MO_2$

In the Chemical Formula 1, M may be Ti, Ce or Zr. Namely, the metal oxide may be titania ($TiO_2$), ceria ($CeO_2$) or zirconia ($ZrO_2$), and it may comprise metal oxide selected from the group consisting of combinations thereof.

According to one embodiment of the invention, the metal oxide may be provided in the form of a precursor thereof. For example, a cerium precursor may exist in the form of a complex salt, and it may comprise a cerium compound, particularly, a metal salt such as cerium nitrate, cerium acetate or cerium chloride, and the like. Preferably, it may comprise cerium nitrate, and after being impregnated in a carrier in the form of a precursor, it may pass through drying and calcination steps and be provided as a final molded catalyst.

Next, according to one embodiment of the invention, the preparation method of a molded catalyst for a hydrogen chloride oxidation reaction process may comprise a step of supporting a ruthenium precursor on the carrier on which the metal oxide is supported.

According to one embodiment of the invention, the ruthenium precursor may be preferably provided as halide, and most preferably, it may be provided as ruthenium chloride comprising chloride. Further, the ruthenium precursor may be provided as a hydrate of a ruthenium precursor according to circumstances.

According to one embodiment of the invention, the ruthenium precursor may be mixed in the form of powders in a solvent, and in the solvent, a solid carrier is suspended to form a precipitate, and thus, the ruthenium precursor may be deposited and supported in the solid carrier. A temperature during the deposition may be 0°C to 100°C, preferably 0°C to 50°C, and a pressure may be a commonly applied pressure of 0.1 Mpa to 1 Mpa, preferably an atmospheric pressure. The supporting may be conducted under an air atmosphere or an inert gas atmosphere such as nitrogen, helium, argon, or carbon dioxide, wherein water vapor may be included. Preferably, it may be conducted under an inert gas atmosphere.

According to one embodiment of the invention, the solvent in which the ruthenium precursor is dissolved may comprise solvents selected from the group consisting of water, alcohol, nitrile, and combinations thereof. Wherein, as the water, high purity water such as distilled water, ion exchanged water or deionized water (DIW) may be used, and in case impurities are contained in the water, the impurities may be attached to a catalyst to degrade the activity of prepared catalyst. The alcohol may be mono alcohol, preferably, primary alcohol of C3 or more. Preferably, a C3 alcohol-based organic solvent may be used, and most preferably, 1-propanol may be used. The solvent may utilize high wettability and hydrophobicity to support the ruthenium component only on the external surface of a titania carrier where hydroxy groups(-OH) exist., and it may provide the effect of improving a dispersion degree of ruthenium supported on a molded titania carrier or the surface of a powder carrier. Moreover, although the content of the solvent is not significantly limited, if it is too large, it may take a lot of time for drying, and thus, it may be freely controlled by a person skilled in the art.

Next, according to one embodiment of the invention, the preparation method of a molded catalyst for a hydrogen chloride oxidation reaction process may further comprise a step of drying and calcining the carrier, respectively after the step of molding the carrier; the step of supporting the metal oxide; and/or the step of supporting a ruthenium precursor on the carrier.

According to one embodiment of the invention, the carrier may be made as a final molded carrier by conducting drying and calcination. Wherein, the drying and calcination may be alternatively conducted as necessary, and the order or number may be freely controlled.

According to one embodiment of the invention, the drying may be conducted at a temperature of 50°C to 150°C for 3 hours to 5 hours. The drying may be conducted through rotation and agitation, and specifically, it may be conducted by vibrating a drying container, or using an agitator equipped in a container. Meanwhile, the drying temperature may be a room temperature to about 100°C, and the pressure may be a commonly applied pressure of 0.1 to 1 MPa, and preferably, an atmospheric pressure.

According to one embodiment of the invention, the calcination may be conducted at a temperature of 300°C to 700°C for 2 hours to 6 hours, followed by cooling to a room temperature. Further, oxidizing gas provided for the calcination may be, for example, gas containing oxygen. Wherein, the oxygen concentration may be a commonly applied concentration of about 1 to 30 vol%. As the oxygen source, air or pure oxygen may be generally provided, and inert gas or water vapor may be further included as necessary. As the oxidizing gas, air may be preferably provided, and the calcination may be conducted at a temperature of about 350°C for 3 hours in an electric furnace under air flow, followed by cooling to a room temperature.

Hereinafter, examples of the invention will be explained in detail such that a person of ordinary skill in the art can easily practice it. However, the invention may be embodied in various forms and is not limited by examples described herein.

**Preparation Example. Preparation of molded catalyst for hydrogen chloride oxidation reaction process**

A molded carrier prepared by extruding a knead made by uniformly mixing 20 g of titania powders (SAKAI corporation), 0.4 g of a cellulose-based organic binder (YUKEN corporation), 2.5 g of $TiO_2$ sol (SAKAI corporation) and 9.0g of DIW was dried in a 100°C oven for 4 hours. The dried molded carrier was cut to an interval of 2 mm to 3 mm, and then, calcined in a 600°C electric furnace for 3 hours to complete a $TiO_2$ molded carrier.

And then, the $TiO_2$ molded carrier was impregnated with a precursor solution in which 1.3 g of cerium nitrate hydrate (Kanto corporation) and 1.3 g of zirconium chloride hydrate (Kanto corporation) were simultaneously dissolved in 6.0 g of DIW, and then, dried in a 100°C oven for 4 hours. The dried molded carrier was calcined in a 600°C electric furnace for 3 hours to obtain a molded carrier containing 2.5% of ceria and 2.5% of zirconia.

Next, 20 g of the above obtained molded carrier was impregnated with a precursor solution in which 0.8 g of ruthenium chloride hydrate (KOJIMA) was dissolved in 6.0 g of DIW, and then, dried in a 100°C oven for 4 hours.

Finally, the dried molded carrier was calcined in a 350°C electric furnace for 3 hours to obtain a molded catalyst containing 2.6% of ruthenium oxide, 2.5% of ceria, and 2.5% of zirconia.

**Example 1. Production of chlorine through hydrogen chloride oxidation reaction (1 wt% CO / 99 wt% 02)**

1.35 g of the molded catalyst obtained in the Preparation Example was charged in a nickel reaction tube (outer diameter 1 inch). In the reaction tube, the catalyst layer was heated to a temperature of 300°C, and 50 wt% of hydrogen chloride and 50 wt% of mixed gas (1 wt% CO / 99 wt% $O_2$) were fed respectively at a rate of 100 mL/min under an atmospheric pressure and a reaction was conducted for 50 hours to produce chlorine.

**Example 2. Preparation of chlorine through hydrogen chloride oxidation reaction (2 wt% CO 198 wt% 02)**

Chlorine was produced by the same method as Example 1, except that the composition of the mixed gas was changed to 2 wt% CO 198 wt% $O_2$.

**Example 3. Preparation of chlorine through hydrogen chloride oxidation reaction (0.4 wt% CO / 2.6 wt% CO2 / 97 wt% 02)**

Chlorine was produced by the same method as Example 1, except that the composition of the mixed gas was changed to 0.4 wt% CO 12.6 wt% $CO_2$ / 97 wt% $O_2$.

**Comparative Example. Preparation of chlorine through hydrogen chloride oxidation reaction (100 wt% 02)**

Chlorine was produced by the same method as Example 1, except that the composition of the mixed gas was changed to 100 wt% $O_2$.

**Experimental Example. Measurement of chlorine yield**

In order to measure the yield of chlorine produced according to Examples and Comparative Example, 50 hours after the initiation of the reaction, gas at the outlet of the reaction tube was distributed to a 15% potassium iodide aqueous solution, thus conducting sampling for 10 minutes. Subsequently, the production amount of chlorine was measured by iodometry and the yield of hydrogen chloride was calculated by the following Mathematical Formula 1. Further, the results were shown in the following Table 1.

[Mathematical Formula 1]

Space time yield(STY) = hydrogen gas production amount(gcl2) / catalyst

amount(gcat) x reaction time(hr).

[Table 1]

|  | Space time yield (g-Cl2/g-cat h) |
|---|---|
| **Example 1** | 1.47 |
| **Example 2** | 1.63 |
| **Example 3** | 1.37 |
| **Comparative Example** | 1.32 |

As show in the Table 1, it can be confirmed that in case carbon oxide is used as mixed gas according to the example of the invention, the yield of chlorine is high, compared to Comparative Example wherein oxygen is used alone.
Thus, it can be confirmed that in case CO and/or $CO_2$ are used as the additives of mixed gas according to the invention, improved chlorine yield may be exhibited at the same reaction temperature and space velocity.
Although the invention has been explained in detail by preferable embodiments referring to drawings, the scope of technical idea of the invention is not limited to such drawings and embodiments. Thus, various modifications or embodiments in an equivalent range may exist within the range of technical idea of the invention. Therefore, the scope of the right of the technical idea according to the invention should be interpreted by the claims, and it should be interpreted that technical ideas within a range equal or equivalent thereto belong to the scope of the right of the invention.

[Industrial Applicability]

As explained, the method for producing chlorine through a hydrogen chloride oxidation reaction according to the invention, compared to a case of conducting an oxidation reaction only in the presence of oxygen, can improve an oxidation reaction activity of hydrogen chloride, and thus, produce chlorine in a high yield, by subjecting hydrogen chloride to an oxidation reaction in mixed gas containing carbon oxide,
[0093]   Further, the catalyst used for the oxidation reaction can solve a sintering of ruthenium oxide that is generated in a commercial production process of chlorine through a hydrogen chloride oxidation reaction, and thus, can maintain the initial catalyst activity despite a long-time catalyst operation.

Moreover, the catalyst is provided as a catalyst in the form of pellets in a commercial production process of chlorine through a hydrogen chloride oxidation reaction, and high mechanical strength may be provided such that they may not be ground during the process.

Finally, the catalyst provides high catalyst activity and durability, and is not restricted in terms of the form, operation conditions of a reactor, and the like, and thus, there is no restrictions on use, and ease of handling is provided.

## Claims

1. A method for producing chlorine through an oxidation reaction of hydrogen chloride, comprising steps of:

   charging a molded catalyst for an oxidation reaction process of hydrogen chloride in a reactor; and
   adding hydrogen chloride and mixed gas to the reactor and reacting them,
   wherein the mixed gas comprises oxygen and carbon oxide.

2. The method for producing chlorine through an oxidation reaction of hydrogen chloride according to claim 1, wherein the content of the mixed gas is 50 parts by weight to 150 parts by weight, based on 100 parts by weight of the hydrogen chloride.

3. The method for producing chlorine through an oxidation reaction of hydrogen chloride according to claim 1, wherein the content of carbon oxide is 0.1 parts by weight to 10 parts by weight, based on total 100 parts by weight of the mixed gas.

4. The method for producing chlorine through an oxidation reaction of hydrogen chloride according to claim 1, wherein the carbon oxide comprises at least one selected from carbon monoxide (CO) and carbon dioxide ($CO_2$).

5. The method for producing chlorine through an oxidation reaction of hydrogen chloride according to claim 4, wherein the weight ratio of the carbon monoxide (CO) and carbon dioxide ($CO_2$) us 1: 1 to 20.

6. The method for producing chlorine through an oxidation reaction of hydrogen chloride according to claim 1, wherein the molded catalyst for an oxidation reaction process of hydrogen chloride comprises

   a carrier; and
   ruthenium oxide supported on the carrier.

7. The method for producing chlorine through an oxidation reaction of hydrogen chloride according to claim 6, wherein the carrier comprises a carrier selected from a group consisting of alumina, titania, zirconia and combinations thereof.

8. The method for producing chlorine through an oxidation reaction of hydrogen chloride according to claim 6, wherein the molded catalyst further comprises metal oxide supported on the carrier, and
   the metal oxide comprises metal oxide represented by the following Chemical Formula 1:

   [Chemical Formula 1]        $MO_2$

   (in the Chemical Formula 1, M is Ti, Ce or Zr.)

9. The method for producing chlorine through an oxidation reaction of hydrogen chloride according to claim 8, wherein, based on 100 parts by weight of the carrier,

   the content of the ruthenium oxide is 1 part by weight to 10 parts by weight, and
   the content of the metal oxide is 0.5 parts by weight to 10 parts by weight.

10. The method for producing chlorine through an oxidation reaction of hydrogen chloride according to claim 1, wherein the molded catalyst is in the shape selected from the group consisting of powders, particles, pellets and combinations thereof.

11. The method for producing chlorine through an oxidation reaction of hydrogen chloride according to claim 10, wherein, in case the molded catalyst is in the shape of pellet, the diameter of the pellet is 1 mm to 10 mm.

**12.** The method for producing chlorine through an oxidation reaction of hydrogen chloride according to claim 1, wherein the reaction of the hydrogen chloride and mixed gas is conducted at a temperature of 280°C to 380°C.

**13.** A method for preparing the molded catalyst for an oxidation reaction process of hydrogen chloride according to claim 1, comprising steps of:

supporting metal oxide on a carrier; and
supporting a ruthenium precursor on the carrier on which the metal oxide is supported.

**14.** The method for preparing a molded catalyst for an oxidation reaction process of hydrogen chloride according to claim 13, further comprising a step of drying and calcining the carrier, after the step of supporting the ruthenium precursor.

**15.** The method for preparing a molded catalyst for an oxidation reaction process of hydrogen chloride according to claim 14, wherein the drying is conducted at a temperature of 50°C to 150°C for 3 hours to 5 hours, and the calcination is conducted at a temperature of 300°C to 700°C for 2 hours to 6 hours .

## INTERNATIONAL SEARCH REPORT

| International application No. |
| --- |
| **PCT/KR2021/019964** |

**A. CLASSIFICATION OF SUBJECT MATTER**

**C01B 7/04**(2006.01)i; **B01J 23/46**(2006.01)i; **B01J 37/02**(2006.01)i; **B01J 37/08**(2006.01)i

According to International Patent Classification (IPC) or to both national classification and IPC

**B. FIELDS SEARCHED**

Minimum documentation searched (classification system followed by classification symbols)

C01B 7/04(2006.01); B01J 23/46(2006.01); B01J 23/78(2006.01); B01J 37/10(2006.01); C01B 7/01(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 염화수소(hydrogen chloride), 산화반응(oxidation reaction), 혼합가스(mixed gas), 산소(oxygen), 탄소산화물(carbon oxide)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-062235 A (MITSUI CHEMICALS INC.) 29 March 2012 (2012-03-29) See paragraphs [0003], [0011], [0024]-[0029], [0044] and [0048]-[0066]; and claims 1 and 4. | 1-15 |
| X | JP 2009-537451 A (BAYER MATERIALSCIENCE AG) 29 October 2009 (2009-10-29) See paragraph [0033]; and claims 1-15. | 1-4,6-15 |
| A | | 5 |
| X | JP 2010-105858 A (SUMITOMO CHEMICAL CO., LTD.) 13 May 2010 (2010-05-13) See paragraphs [0021] and [0032]-[0040]; and claims 1-8. | 1-4,6-15 |
| A | | 5 |
| X | JP 2007-021484 A (SUMITOMO CHEMICAL CO., LTD.) 01 February 2007 (2007-02-01) See paragraphs [0011], [0018], [0022], [0029] and [0033]; and claims 1-8. | 1-4,6-15 |
| A | | 5 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2022** | **11 April 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/019964** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007-144392 A (SUMITOMO CHEMICAL CO., LTD.) 14 June 2007 (2007-06-14)<br>See claims 1-7. | 1-15 |

Form PCT/ISA/210 (second sheet) (July 2019)

**INTERNATIONAL SEARCH REPORT**
**Information on patent family members**

International application No.

**PCT/KR2021/019964**

| Patent document cited in search report | | | Publication date (day/month/year) | Patent family member(s) | | | Publication date (day/month/year) |
|---|---|---|---|---|---|---|---|
| JP | 2012-062235 | A | 29 March 2012 | JP | 5563937 | B2 | 30 July 2014 |
| JP | 2009-537451 | A | 29 October 2009 | CN | 101448736 | A | 03 June 2009 |
| | | | | DE | 102006024548 | A1 | 29 November 2007 |
| | | | | EP | 2038212 | A1 | 25 March 2009 |
| | | | | KR | 10-2009-0015982 | A | 12 February 2009 |
| | | | | RU | 2008150589 | A | 27 June 2010 |
| | | | | TW | 200808654 | A | 16 February 2008 |
| | | | | US | 2010-0266481 | A1 | 21 October 2010 |
| | | | | WO | 2007-134775 | A1 | 29 November 2007 |
| JP | 2010-105858 | A | 13 May 2010 | JP | 5249716 | B2 | 31 July 2013 |
| JP | 2007-021484 | A | 01 February 2007 | JP | 4438771 | B2 | 24 March 2010 |
| | | | | WO | 2006-135074 | A1 | 21 December 2006 |
| JP | 2007-144392 | A | 14 June 2007 | JP | 4487975 | B2 | 23 June 2010 |
| | | | | WO | 2007-049797 | A1 | 03 May 2007 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120040701
- KR 1020110107350
- KR 1020130100282

**Non-patent literature cited in the description**

- A CeO2/ZrO2-TiO2 Catalyst for the Selective Catalytic Reduction of NOx with NH3. *Catalysts,* August 2018, 592